# EUROPEAN PATENT SPECIFICATION

(11) **EP 1 374 216 B1**
(45) Date of publication and mention of the grant of the patent: **27.04.2016**
(21) Application number: 02713722.3
(22) Date of filing: 04.03.2002
(51) Int. Cl.: G09G 5/00

(54) **NETWORK MANAGEMENT SYSTEM INCLUDING A USER INTERFACE USING SPEECH GENERATION AND RECOGNITION**
NETZWERKMANAGEMENTSYSTEM MIT EINER BENUTZERSCHNITTSTELLE UNTER VERWENDUNG VON SPRACHERZEUGUNG UND -ERKENNUNG
SYSTEME DE GESTION D'UN RESEAU COMPORTANT UNE INTERFACE UTILISATEUR RECOURANT A LA SYNTHESE ET LA RECONNAISSANCE VOCALES

(30) Priority: 02.03.2001 US 272972 P; 07.09.2001 US 949101
(43) Date of publication of application: 02.01.2004
(73) Proprietor: CA, Inc., Islandia, NY 11749 (US)
(72) Inventor: VINBERG, Anders, Plandome Manor, NY 11030 (US)
(74) Representative: Dunlop, Hugh Christopher
(86) International application number: PCT/US2002/006442
(87) International publication number: WO 2002/073445

(56) References cited:
- EP-A- 0 936 597
- US-A- 5 444 849
- US-A- 5 444 849
- US-A- 5 748 884
- US-A- 5 748 884
- US-A- 6 094 681
- US-A1- 2002 002 580
- US-B1- 6 212 581

## Description

### Technical Field

The present application generally relates to the field of monitoring and managing ongoing processes. Within this field, the present application addresses generating alert and diagnostic messages for the attention of human operators.

### Background

Systems that manage computer or network systems, or other systems with embedded computer technology, commonly monitor various system parameters for the purpose of detecting problems and alerting human operators to the problem. Various techniques can be employed to monitor ongoing processes. The monitored values can be analyzed in various ways, including comparison with thresholds, correlation of several values, and correlation of values over time to discover problems, unprecedented situations, or other events.

Some systems use various techniques to predict events before they occur. One such system is described in commonly owned U.S. Patent No. 6,327,550. In such systems one response to the discovery or prediction is to bring the event to the attention of a human operator. For example, these management systems can issue a text message alert and different techniques may be employed for presenting this text message to the operator, such as a Windows dialog box, monitoring consoles, event logs, email messages, pager messages. The alert can also be a provided as an audio message through loudspeakers, headsets, or a telephone.

In large management systems with many managed components and/or networks and a high level of activity, the management systems may generate a large number of alert messages. Some alert messages may be more important than others, but are typically issued because the alert functionality of such management systems is not open to modification. Other messages may be redundant because several management systems may independently detect the consequences of an event. As a result, current management systems include various techniques for filtering such alert messages based on various rules unrelated to the content of the message. For example, some conventional management systems designate the severity of a detected or predicted event as the filtering rule. This permits the management system to present only critical messages, or messages about events above a certain level of severity. Other systems correlate alert messages over time or over several objects as a filtering rule. This permits the recognition that a message may indicate a critical problem, even though it may not indicate such criticality by itself, e.g., a minor error may be more critical if it occurs several times in a short time period.

Even after messages have been filtered so only meaningful messages remain, individual users may be interested in different categories of messages. Some management systems include various techniques for filtering alert messages presented to particular individuals, such as messages related to one or more groups of managed components or networks that denote some sort of business process. An example of such a management system is described in commonly owned U.S. Patent No. 5,958,012.

### Summary

This disclosure provides methods and systems for generating audio alert messages and processing audio commands in enterprise management systems.

According to one aspect, the present invention provides a combined alert and command control system for communicating with a plurality of user devices as set out in claim 1.

According to another aspect, the present invention provides a method of controlling the communication of alerts and commands between a combined alert and command control system and a plurality of user devices via a single communication path as set out in claim 11.

Computer-readable storage media are also disclosed which includes processing instructions for implementing certain disclosed methods.

### Brief Description of the Drawings

For a more complete understanding of the present methods and systems, reference is now made to the following description taken in conjunction with the accompanying drawings in which like reference numbers indicate like features and wherein:
Figure 1A illustrates an exemplary enterprise system;
Figure 1B illustrates an exemplary management system topology that may be used to manage an IT enterprise in accordance with the disclosed methodology;
Figure 2 illustrates a more detailed view of the exemplary management system of Figure 1B connected to components of an IT enterprise;
Figure 3 is an exemplary methodology for generating audio alerts according to one embodiment of the present disclosure; and
Figure 4 is an exemplary methodology for processing audio commands according to one embodiment of the present disclosure.

### Detailed Description

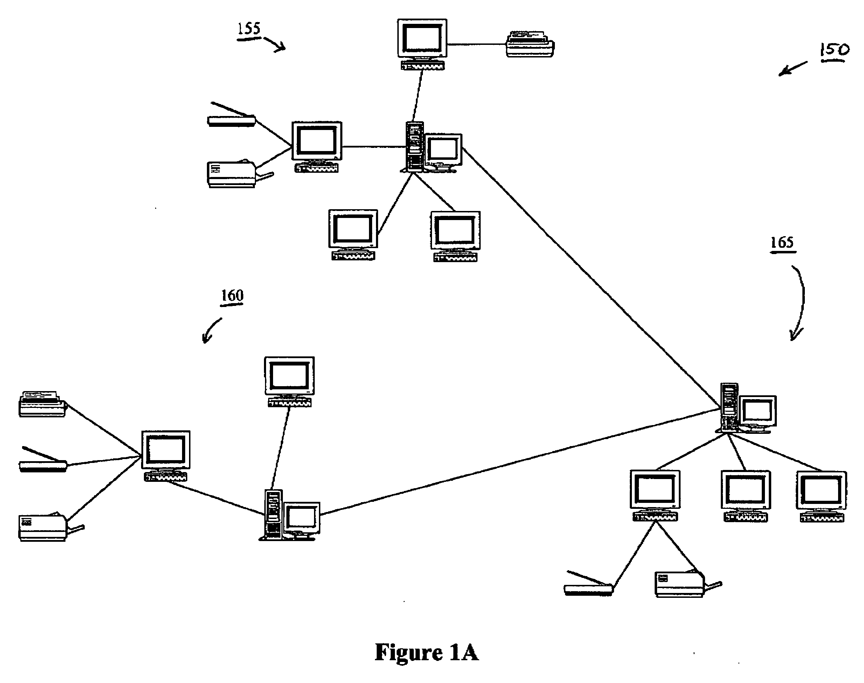

An exemplary IT enterprise is illustrated in Figure 1A. The IT enterprise **150** includes local area networks **155, 160** and **165.** IT enterprise further includes a variety of hardware and software components, such as workstations, printers, scanners, routers, operating systems, applications, and application platforms, for example. The components of IT enterprise **150** may be monitored and managed in accordance with the present disclosure.

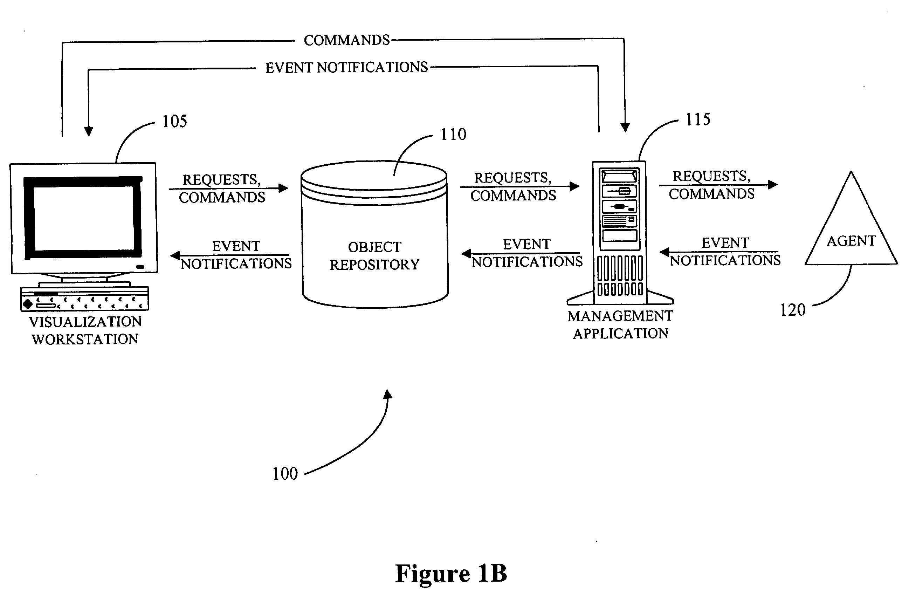

The various components of an exemplary management system **100** topology that can manage an IT enterprise in accordance with the present disclosure are shown in Figure 1B. The management system **100** includes at least one visualization workstation **105,** an object repository **110,** one or more management applications **115,** and one or more management agents **120** associated with each management application **115.**

The visualization workstation **105** provides a user access to various applications including a network management application **115.** Workstation **105** interacts with an object repository **110** which stores and delivers requests, commands and event notifications. Workstation **105** requests information from object repository **110,** sends commands to the object repository, and gets notification of events, such as status changes or object additions from it. The object repository **110** receives request information from the management application **115,** which is fed by the management agents **120** responsible for monitoring and managing certain components or systems in an IT enterprise.

The management application **115** maintains object repository **110** to keep track of the objects under consideration. The object repository **110** may be a persistent store to hold information about managed components or systems, such as a database. In an alternative embodiment, the management application **115** and object repository **110** may be integrated into a single unit that can hold information about managed components in volatile memory and perform the tasks of the management application.

As shown, one architectural aspect of the present system is that in normal operation, the visualization workstation **105** interacts primarily with the object repository **110.** This reduces network traffic, improves the performance of graphical rendering at the workstation, and reduces the need for interconnectivity between the visualization workstation **105** and a multitude of management applications **115,** their subsystems and agents **120** existing in IT enterprises. Of course, embodiments having other configurations of the illustrated components are contemplated, including a stand-alone embodiment in which the components comprise an integrated workstation.

In addition to handling requests, commands and notifications, object repository **110** may also handle objects describing the structure and operation of the management system 100. Such objects may describe the momentary state, load, and performance of the components and/or systems. Such objects may be populated using a manual process or an automatic discovery utility.

According to one embodiment, the management system of the present disclosure includes an alert system that is capable of providing audio alerts to operators. Another embodiment of the management system of the present disclosure includes the alert system and a command/control system that is capable responding to verbal commands from devices that supports speech generation or reproduction.

The alert system includes an alert generation component that communicates with a speech generation component to provide speech-based audio alerts. The command/control system includes a speech recognition component that communicates with a command/control component (or user interface) to enable human operators to verbally request retrieval of information from the management system, or to verbally issue commands to the management system to take certain actions. This combined speech-based alert system and command/control system may be incorporated as part of the management application **115** of the management system **100** or as a user interface in any kind of component (e.g., computer) connected to the IT enterprise. In one embodiment, this is accomplished using speakers and a microphone, or in alternative configurations, using a headset with headphones and an integrated microphone. In alternative embodiments, the combined alert system and command/control system (collectively referred to herein as the ACC system) is connected to a telephony system, to allow alert messages to be sent out to an operator through a telephone and commands to be received through a telephone. In still other alternative embodiments, the speech-based system may be connected to a handheld device, such as a Palm Pilot. Of course, any handheld device used with the present system should be capable of supporting audio and/or speech generation. Thus, the present system is readily capable of exploiting any new devices supporting speech generation as they become available.

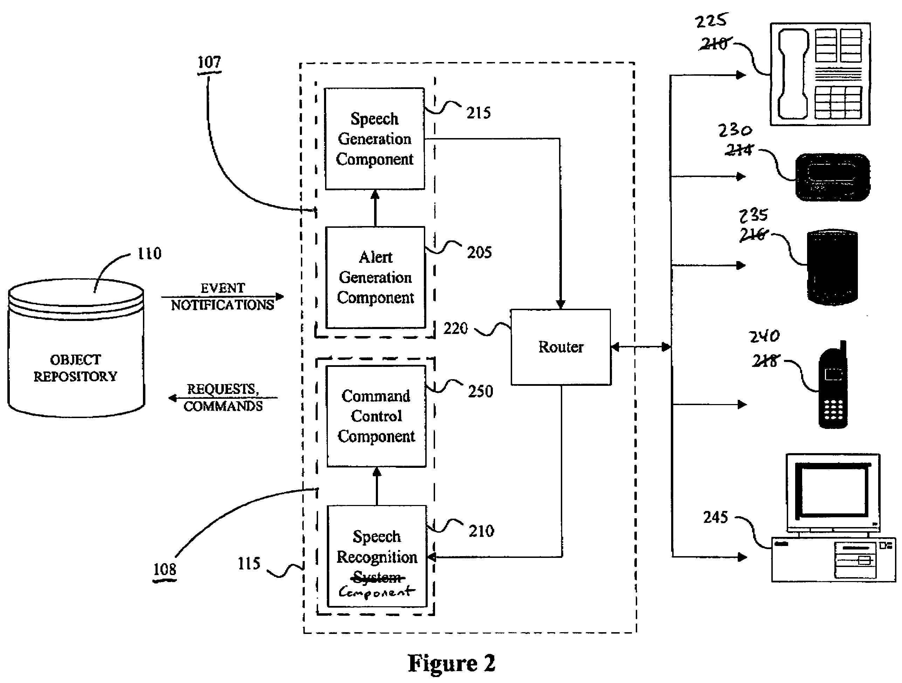

Referring now to Figure 2, one embodiment of an ACC system according to the present disclosure is shown. The alert system **107** includes alert generation component 205 and speech generation component **215** that interacts with devices **210-245,** as described below, via router **220.** The command/control system **108** includes command/control component **250** and speech recognition component **210** that interacts with devices **210-245,** as described below, via router **200.** Information can be stored in or retrieved from object repository **110** by alert generation component **205** or command control component **250.** In this embodiment, at least a portion of the ACC system is integrated with the management application **115** and another portion of the ACC system is integrated with the object repository **110.** In an alternative embodiment, the ACC system can be integrated with the management application **115,** and in another alternative embodiment the ACC system can be integrated with the object repository **110** and another component in the IT enterprise.

In addition, in the embodiment of Figure 2, the alert system **107,** the command/control system **108** or both interact with the devices **210-245** via a single communication path, e.g., router **220.** This configuration provides a unified alerting system and a unified command-and-control system for various enterprise components, networks or subsystems in the IT enterprise. Further, like management application **115,** other enterprise components, networks and/or subsystems may populate the object repository **110** with event notifications that may be delivered according to the methodology of the present application.

In conventional management systems subsystems are typically responsible for generating and delivering their own event notifications, and handling commands from operators (or users). For example, virus detection, intrusion detection, system performance monitoring, network monitoring, application monitoring, job scheduling, and access control are traditionally handled by separate subsystems with separate user interfaces and separate alerting systems. By providing an integrated user interface for reporting events and receiving commands in accordance with the present disclosure, management systems can more efficiently manage an enterprise, particularly with regard to the use of audio notifications and commands.

In addition to communicating event notifications to visualization workstation **105,** object repository **110** further provides such notifications to the alert generation component **205.** Alert generation component **205** processes each notification to determine whether an audio alert notification should be transmitted, and if so, determines how the alert is to be transmitted. If the alert generation component **205** is configured to provide an audio alert notification for a particular event, alert generation component **205** employs speech generation component **215** to generate the audio alert notification. The audio alert notification is then transmitted via router **220** to any of a number of devices that support speech generation or reproduction. Such devices, for example, include without limitation telephone **225,** pager **230,** PDA **235,** mobile telephone **240** and visualization workstation or computer **245.**

Further, in addition to receiving requests and commands from visualization workstation **105,** object repository **110** may receive requests and/or commands via command control component **250.** Upon receiving an audio command from a device that supports speech generation or reproduction via router 220, speech recognition system **210** converts the audio command into command data that may operate as input to the command control component **250**. The conversion of the audio command into command data may be accomplished using conventional speech processing techniques, known to one of ordinary skill in the art. As noted, speech recognition system **210** receives requests and/or commands in a verbal form from other devices, for example devices **225-245.** Such commands may be in response to an alert generated by alert generation component **205.**

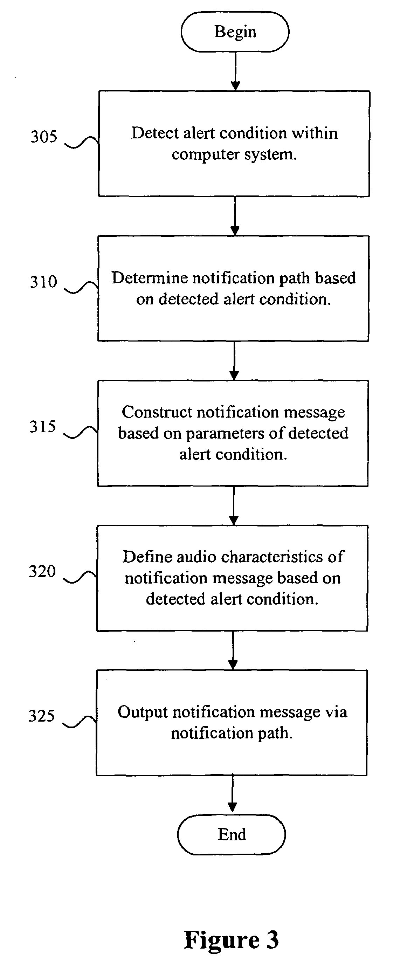

Referring now to Figure 3, there is illustrated a flowchart describing the operation of one methodology for generating audio alerts. At block **305,** an alert condition is detected within the IT enterprise. The alert condition may be detected by alert generation component **205** based on an event notification received from object repository **110.** At block **310,** alert generation component **205** determines a notification path associated with the detected alert condition. The notification path may direct that an alert be sent to one or more devices **210-245,** and may be determined based on previous events, such as whether a prior alert has been generated without a response.

According to one embodiment of the present application, the determination of the notification path may be accomplished using a system for directing messages to different users depending on severity, type of object or any other parameter that may be the basis for filtering event notifications. Such a mechanism may be useful since many different types of messages, from many different contexts may be generated in a typical management system. Further, the determination of the notification path may include determining multiple paths to enable more than one user to be designated to receive a particular type of audio alert notification.

In addition to supporting the transmission of audio alert notifications to multiple users, the alert system **107** may also be configured to utilize an escalation list. An escalation list is a list of people to be notified for a particular class of message. The list may be stored in object repository **110,** the management application **115,** the alert generation component **205** or other storage facility. The list may be multi-tiered and may represent several levels of responsibility. For example, the list may include a first set of one or more operators who are primarily responsible for a particular alert, and a second set of one or more operators who are responsible if no one from the first set addresses the event within a particular period of time. Of course, the escalation list may be structured in a variety of ways, with any number of levels.

Given an escalation list with two operators, the list can be constructed, for example, such that if a first person on the escalation list does not respond to a phone message within five minutes, the second person on the list may be notified. In such an example, the alert system may deliver the following exemplary audio alert notification to a telephone associated with the second person:
"The NT server uschdb02 is predicted to begin thrashing within half an hour. We attempted to notify Sally Robinson, but she did not respond.
You are responsible for handling this alert."

Some persons may be designated to be notified even if others have been given responsibility for handling a problem. For example, the alert system may deliver the following exemplary message to a manager:
"The NT server uschdb02 is predicted to begin thrashing within half an hour. This message is for information only. We have notified Bob Jones, who is the operator on duty and is responsible for handling this problem."

According to alternative embodiments of the present application, the management application **115** may include a facility for escalating the message to the next responsible manager if a problem is not addressed within a designated time limit, or if the same problem occurs several times within a designated time period. For example, the system may deliver the following message to the next responsible manager:
"The NT server uschdb02 has gone into thrashing three times within the past hour. We have notified Bob Jones, who is the operator on duty and is responsible for handling this problem."

The management system **100** may also be configured employ control logic for intelligently filtering and selectively providing audio alert notifications. Such filtering control logic may be useful to avoid an operating condition in which many audio alert notifications are provided within a narrow time period. In one embodiment, the system enables the user to define a personal filtering profile, so that only messages relevant to the user are sent. In alternative embodiments, the filtering may be based on one or more properties of the object(s) or alert message(s), including, for example, the type of the object(s), the name of the object(s) (including name patterns), the location of the object(s), the inclusion of the object in a business process view. The filtering may also be based on the severity of the alert, the time of day, the level of risk in a predicted event, the importance of the object and/or the importance, severity, type, name, etc. of object(s) impacted by the problem, which is described in commonly owned, concurrently filed related U.S. Utility Patent Application entitled "Method and Apparatus for Filtering Messages Based on Content".

With continuing reference to Figure 3, at block **315,** a notification message is constructed based, in part, on the parameters of the detected alert condition and other factors or conditions known in the art. The notification message may be constructed based on other additional factors.

In one embodiment of the present application, to facilitate user understanding of the audio alert notifications, some of the terms and names commonly used in an enterprise management system operator's lexicon may be modified. For example, an identifier for an operating system that is publicly known as "NT Server" may be stored in a database as the single word "NTServer", without any spaces separating the words. Such a single word identifier may be employed because many databases and programming languages do not permit spaces within an identifier. Further, users may use non-standard capitalization to aid in parsing non-standard words, and are adept at parsing such constructions even without the aid of capitalization. For example, "oraclev8" may be immediately recognized by an experienced user as referring to "Oracle Version 8".

The command/control system may incorporate a facility for storing, in the object repository **110** or in one or more other databases, a pronounceable version of technical names that a speech generation system cannot identify a word or phrase. Alternatively, user readable and pronounceable names, with the embedded spaces, may be utilized as the public names of components, and the command/control system automatically generates the internal, technically acceptable name.

At block **320,** the audio characteristics of the notification message are defined based on the detected alert condition. Audio characteristics may include, for example, volume, panning, distortion and resolution.

When an operator sitting in front of a computer receives an audio alert notification through the computer's speaker system, the next step is often to navigate through the standard on-screen user interface to bring the relevant object up on screen, to allow further inspection of the situation. In typical user interfaces, such navigation may involve counter-intuitive clicking and scrolling. In some modern user interfaces, such as 3-D "virtual reality" views, infinitely pan able 2-D maps and hyperbolic trees, the navigation is a seamless movement in some direction.

According to one embodiment of the present application, to assist the user to immediately navigate to an object, speech generation component **215** may use stereo or surround-sound speakers to position the source of the sound in the right direction. If the operator is looking at a part of a map, and an alert message is presented from the right, it is natural to scroll the screen to the right. Consequently, the use of audio characteristics may enhance the utility of the present application.

At block **325,** the notification message is output via the notification path.

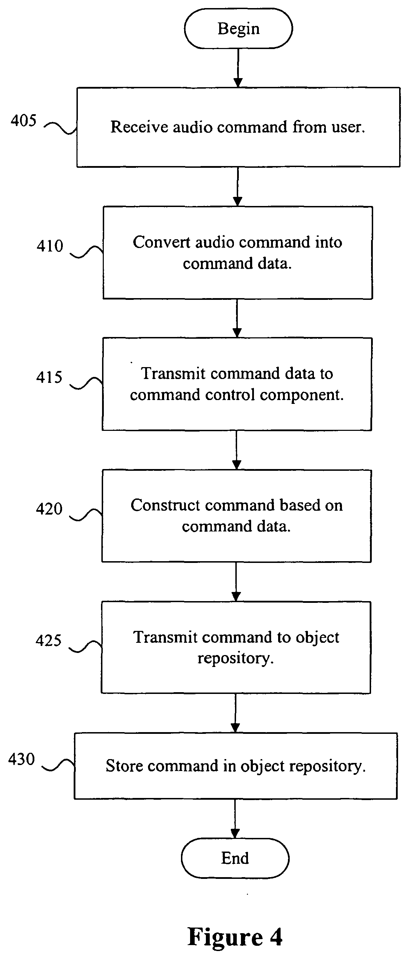

Referring now to Figures 2 and 4, the operation of one methodology for receiving an audio request/command will be described. At block **405,** an audio request/command is received from a user. The audio request/command is received through router **220** by speech recognition component **210.** The audio request/command is converted into command data **(410)** by speech recognition component **210**. The resulting command data is then transmitted to command control component **250** for processing **(415).**

According to block **420,** command control component **250** constructs a command based on the received command data. The command control component **250** transmits **(425)** the generated command to object repository **110** where it is stored **(430)** until retrieved and executed by the network management application **115.**

While the present disclosure has been described with reference to a network management application, the disclosed methodology and systems may also be applied to business applications such as order processing or credit validation which may be interfaced with a management system and to its alert management systems. Thus, in an alternate embodiment, if a business application generates alert messages when inventory levels get below a certain threshold or credit card fraud is detected, for example, then those messages can be delivered to any human manager through computer speakers, a telephone or other audio-based device.

It should also be appreciated that disclosed interface is not limited to operating in a single human language. Although alert notifications generated by management systems or applications are typically generated in a specific language, most often in English because of the domination of the IT industry by American companies, there are many multinational enterprises that use such systems which employ human operators who may speak other languages. Therefore, according to alternate embodiments of the present system, the system may include a facility for translating the message to a language designated for a specific recipient, and then generating the audio alert notification.

## Claims

1. A combined alert and command control system of a system (100) comprising a plurality of components and management agents (120) monitoring and managing said components, the combined alert and command control system communicating with a plurality of user devices (210, 214, 216, 218, 245), the combined alert and command control system comprising:
i) an object repository (110) for storing command objects and event notifications;
ii) alert generation means (205) for generating an audio alert notification message and transmitting the generated audio alert notification message to at least one of the plurality of user devices (210, 214, 216, 218, 245), comprising:
- means (205) for receiving notification of a alert condition detected within said system (100) by said alert generation means based on an event notification from said object repository (110);
- means for determining a notification path associated with the detected alert condition;
- means (205) for generating an audio alert notification message based on the received notification of the detected alert condition, using a speech generation component (215); and
- means for transmitting the generated audio alert notification message to said at least one of the plurality of user devices via the determined notification path; and
iii) command control means (250) for processing an audio command, comprising:
- means (250) for receiving an audio command from one of said user devices (210, 214, 216, 218, 245);
- means (250) for processing the received audio command to derive command data, using a speech recognition component (210);
- means (250) for constructing a command based on the derived command data; and
- means (250) for storing the constructed command in said object repository (110);
wherein the alert generation means (205) and the command control means (250) are arranged to interact with the plurality of user devices via a single communication path.

2. The combined alert and command control system of claim 1, wherein the alert generation means (205) is further arranged to identify a portion of the message that is likely to be difficult for a user to understand and replacing the identified portion with a more easily understood synonym.

3. The combined alert and command control system of claim 1, wherein the detected alert condition is an alert condition detected within a plurality of subsystems of a network management application.

4. The combined alert and command control system of claim 1, wherein the alert generation means (205) is further arranged to generate the audio notification message with at least one audio characteristic based on the received notification of the detected alert condition.

5. The combined alert and command control system of claim 4, wherein the audio characteristic is a volume level of the generated audio notification message.

6. The combined alert and command control system of claim 4, wherein the audio characteristic is a balance audio characteristic to position the source of the audio in a predetermined direction.

7. The combined alert and command control system of claim 1, wherein the alert generation means (205) further comprises means for filtering the generated audio notification message based on one or more properties of the audio notification message.

8. The combined alert and command control system of claim 1, wherein the means for determining the notification path is arranged to analyze a parameter of the detected alert condition and to select the notification path based on the parameter.

9. The combined alert and command control system of claim 1, wherein the means for determining the notification path is arranged to analyze an escalation list of users to be notified of the alert condition, wherein the escalation list is a hierarchical list of users structured to identify a notification path depending on non-response time of the users in the escalation list within a designated time limit.

10. The combined alert and command control system of claim 1, wherein the means for generating the audio notification message includes:
means for determining a user associated with the audio notification message;
means for determining a language preference associated with the user; and
means for constructing the audio message based on the language preference.

11. A method of controlling the communication of alerts and commands between a combined alert and command control system of a system (100) comprising a plurality of components and management agents (120) monitoring and managing said components, and a plurality of user devices (210, 214, 216, 218, 245) via a single communication path, the combined alert control system including alert generation means (205) for generating an audio alert, command control means (250) for processing an audio command and an object repository (110) for storing command objects and event notifications, the method comprising the combined alert and command control system performing the steps of:
at the alert generation means (205),
i) receiving notification of a alert condition detected within said system (100) by said alert generation means based on an event notification from said object repository (110); and in response,
ii) determining a notification path associated with the detected alert condition;
iii) generating an audio alert notification message based on the received notification of the detected alert condition, using a speech generation component (215); and
iv) transmitting the generated audio alert notification message to said at least one of the plurality of user devices via the determined notification path; and
at the command control means (250)
i) receiving an audio command from one of said user devices (210, 214, 216, 218, 245), and in response,
ii) processing the received audio command to derive command data, using a speech recognition component (210);
iii) constructing a command based on the derived command data; and
iv) storing the constructed command in said object repository (110).

12. A computer-readable storage medium storing processing instructions which, when executed by a suitable computer, cause the computer to become configured as the combined alert and command control system of any one of claims 1 to 10.

## Patentansprüche

1. Kombiniertes Alarm- und Befehlssteuersystem eines Systems (100), das mehrere Komponenten und Management-Agenten (120) zum Überwachen und Verwalten der genannten Komponenten umfasst, wobei das kombinierte Alarm- und Befehlssteuersystem mit mehreren Benutzergeräten (210, 214, 216, 218, 245) kommuniziert, wobei das kombinierte Alarm- und Befehlssteuersystem Folgendes umfasst:
i) ein Objekt-Repository (110) zum Speichern von Befehlsobjekten und Ereignisbenachrichtigungen;
ii) Alarmerzeugungsmittel (205) zum Erzeugen einer Audio-Alarmbenachrichtigungsmeldung und Übertragen der erzeugten Audio-Alarmbenachrichtigungsmeldung zu wenigstens einem der mehreren Benutzergeräte (210, 214, 216, 218, 245), das Folgendes umfasst:
- Mittel (205) zum Empfangen einer Benachrichtigung über einen Alarmzustand, der in dem genannten System (100) von dem genannten Alarmerzeugungsmittel auf der Basis einer Ereignisbenachrichtigung von dem genannten Objekt-Repository (110) erkannt wurde;
- Mittel zum Ermitteln eines mit dem erkannten Alarmzustand assoziierten Benachrichtigungspfades;
- Mittel (205) zum Erzeugen einer Audio-Alarmbenachrichtigungsmeldung auf der Basis der empfangenen Benachrichtigung über den erkannten Alarmzustand unter Verwendung einer Spracherzeugungskomponente (215); und
- Mittel zum Übertragen der erzeugten Audio-Alarmbenachrichtigungsmeldung zu dem genannten wenigstens einen der mehreren Benutzergeräte über den ermittelten Benachrichtigungspfad; und
iii) Befehlssteuermittel (250) zum Verarbeiten eines Audio-Befehls, das Folgendes umfasst:
- Mittel (250) zum Empfangen eines Audio-Befehls von einem der genannten Benutzergeräte (210, 214, 216, 218, 245);
- Mittel (250) zum Verarbeiten des empfangenen Audio-Befehls zum Ableiten von Befehlsdaten unter Verwendung einer Spracherkennungskomponente (210);
- Mittel (250) zum Konstruieren eines Befehls auf der Basis der abgeleiteten Befehlsdaten; und
- Mittel (250) zum Speichern des konstruierten Befehls in dem genannten Objekt-Repository (110);
wobei das Alarmerzeugungsmittel (205) und das Befehlssteuermittel (250) zum Interagieren mit den mehreren Benutzergeräten über einen einzelnen Kommunikationspfad ausgelegt sind.

2. Kombiniertes Alarm- und Befehlssteuersystem nach Anspruch 1, wobei das Alarmerzeugungsmittel (205) ferner zum Identifizieren eines Teils der Nachricht, die für einen Benutzer wahrscheinlich schwer zu verstehen sein wird, und zum Ersetzen des identifizierten Teils durch ein leichter zu verstehendes Synonym ausgelegt ist.

3. Kombiniertes Alarm- und Befehlssteuersystem nach Anspruch 1, wobei der erkannte Alarmzustand ein Alarmzustand ist, der innerhalb von mehreren Subsystemen einer Netzwerkmanagementapplikation erkannt wurde.

4. Kombiniertes Alarm- und Befehlssteuersystem nach Anspruch 1, wobei das Alarmerzeugungsmittel (205) ferner zum Erzeugen der Audio-Benachrichtigungsmeldung mit wenigstens einer Audio-Charakteristik auf der Basis der empfangenen Benachrichtigung des erkannten Alarmzustands ausgelegt ist.

5. Kombiniertes Alarm- und Befehlssteuersystem nach Anspruch 4, wobei die Audio-Charakteristik ein Lautstärkepegel der erzeugten Audio-Benachrichtigungsmeldung ist.

6. Kombiniertes Alarm- und Befehlssteuersystem nach Anspruch 4, wobei die Audio-Charakteristik eine Audioabgleich-Charakteristik zum Positionieren der Quelle des Tons in einer vorbestimmten Richtung ist.

7. Kombiniertes Alarm- und Befehlssteuersystem nach Anspruch 1, wobei das Alarmerzeugungsmittel (205) ferner Mittel zum Filtern der erzeugten Audio-Benachrichtigungsmeldung auf der Basis von einer oder mehreren Eigenschaften der Audio-Benachrichtigungsmeldung umfasst.

8. Kombiniertes Alarm- und Befehlssteuersystem nach Anspruch 1, wobei das Mittel zum Ermitteln des Benachrichtigungspfades zum Analysieren eines Parameters des erkannten Alarmzustands und zum Auswählen des Benachrichtigungspfades auf der Basis des Parameters ausgelegt ist.

9. Kombiniertes Alarm- und Befehlssteuersystem nach Anspruch 1, wobei das Mittel zum Ermitteln des Benachrichtigungspfades zum Analysieren einer Eskalationsliste von über den Alarmzustand zu benachrichtigenden Benutzern ausgelegt ist, wobei die Eskalationsliste eine hierarchische Liste von Benutzern ist, strukturiert zum Identifizieren eines Benachrichtigungspfades je nach einer Nichtantwortzeit der Benutzer in der Eskalationsliste innerhalb einer designierten Zeitgrenze.

10. Kombiniertes Alarm- und Befehlssteuersystem nach Anspruch 1, wobei das Mittel zum Erzeugen der Audio-Benachrichtigungsmeldung Folgendes umfasst:
Mittel zum Ermitteln eines mit der Audio-Benachrichtigungsmeldung assoziierten Benutzers;
Mittel zum Ermitteln einer mit dem Benutzer assoziierten Sprachpräferenz; und
Mittel zum Konstruieren der Audio-Meldung auf der Basis der Sprachpräferenz.

11. Verfahren zum Steuern der Kommunikation von Alarmen und Befehlen zwischen einem kombinierten Alarm- und Befehlssteuersystem eines Systems (100), das mehrere Komponenten und Management-Agenten (120) zum Überwachen und Verwalten der genannten Komponenten umfasst, und mehreren Benutzergeräten (210, 214, 216, 218, 245) über einen einzelnen Kommunikationspfad, wobei das kombinierte Alarmsteuersystem Alarmerzeugungsmittel (205) zum Erzeugen eines Audio-Alarms, Befehlssteuermittel (250) zum Verarbeiten eines Audio-Befehls und ein Objekt-Repository (110) zum Speichern von Befehlsobjekten und Ereignisbenachrichtigungen umfasst, wobei das Verfahren beinhaltet, dass das kombinierte Alarm- und Befehlssteuersystem die folgenden Schritte ausführt:
am Alarmerzeugungsmittel (205):
i) Empfangen einer Benachrichtigung über einen Alarmzustand, der in dem genannten System (100) von dem genannten Alarmerzeugungsmittel auf der Basis einer Ereignisbenachrichtigung von dem genannten Objekt-Repository (110) erkannt wird; und als Antwort darauf
ii) Ermitteln eines mit dem erkannten Alarmzustand assoziierten Benachrichtigungspfades;
iii) Erzeugen einer Audio-Alarmbenachrichtigungsmeldung auf der Basis der empfangenen Benachrichtigung über den erkannten Alarmzustand unter Verwendung einer Spracherzeugungskomponente (215); und
iv) Senden der erzeugten Audio-Alarmbenachrichtigungsmeldung zu dem genannten wenigstens einen der mehreren Benutzergeräte über den ermittelten Benachrichtigungspfad; und
an dem Befehlssteuermittel (250):
i) Empfangen eines Audio-Befehls von einem der genannten Benutzergeräte (210, 214, 216, 218, 245), und als Antwort darauf
ii) Verarbeiten des empfangenen Audio-Befehls zum Ableiten von Befehlsdaten unter Verwendung einer Spracherkennungskomponente (210);
iii) Konstruieren eines Befehls auf der Basis der abgeleiteten Befehlsdaten; und
iv) Speichern des konstruierten Befehls in dem genannten Objekt-Repository (110).

12. Computerlesbares Speichermedium, das Verarbeitungsbefehle speichert, die bei Ausführung durch einen geeigneten Computer bewirken, dass der Computer zu dem kombinierten Alarm- und Befehlssteuersystem nach einem der Ansprüche 1 bis 10 konfiguriert wird.

## Revendications

1. Un système de contrôle de commande et d'alerte combiné d'un système (100) comprenant une pluralité de composants et d'agents de gestion (120) qui surveillent et gèrent lesdits composants, le système de contrôle de commande et d'alerte combiné communiquant avec une pluralité de dispositifs d'utilisateur (210, 214, 216, 218, 245), le système de contrôle de commande et d'alerte combiné comprenant :
i) un référentiel d'objets (110) destiné à la conservation en mémoire d'objets de commande et de notifications d'événement,
ii) un moyen de génération d'alertes (205) destiné à la génération d'un message de notification d'alerte audio et à la transmission du message de notification d'alerte audio généré à au moins un dispositif de la pluralité de dispositifs d'utilisateur (210, 214, 216, 218, 245), comprenant :
- un moyen (205) de réception d'une notification d'une condition d'alerte détectée à l'intérieur dudit système (100) par ledit moyen de génération d'alertes en fonction d'une notification d'événement provenant dudit référentiel d'objets (110),
- un moyen de détermination d'un trajet de notification associé à la condition d'alerte détectée,
- un moyen (205) de génération d'un message de notification d'alerte audio en fonction de la notification reçue de la condition d'alerte détectée au moyen d'un composant de génération de parole (215), et
- un moyen de transmission du message de notification d'alerte audio généré audit au moins un dispositif de la pluralité de dispositifs d'utilisateur par l'intermédiaire du trajet de notification déterminé, et
iii) un moyen de contrôle de commande (250) destiné au traitement d'une commande audio, comprenant :
- un moyen (250) de réception d'une commande audio provenant d'un desdits dispositifs d'utilisateur (210, 214, 216, 218, 245),
- un moyen (250) de traitement de la commande audio reçue de façon à dériver des données de commande au moyen d'un composant de reconnaissance vocale (210),
- un moyen (250) de construction d'une commande en fonction des données de commande dérivées, et
- un moyen (250) de conservation en mémoire de la commande construite dans ledit référentiel d'objets (110),
où le moyen de génération d'alertes (205) et le moyen de contrôle de commande (250) sont agencés de façon à interagir avec la pluralité de dispositifs d'utilisateur par l'intermédiaire d'un trajet de communication.

2. Le système de contrôle de commande et d'alerte combiné selon la Revendication 1, où le moyen de génération d'alertes (205) est agencé en outre de façon à identifier une partie du message qui est susceptible d'être difficile à comprendre pour un utilisateur et le remplacement de la partie identifiée par un synonyme plus facile à comprendre.

3. Le système de contrôle de commande et d'alerte combiné selon la Revendication 1, où la condition d'alerte détectée est une condition d'alerte détectée à l'intérieur d'une pluralité de sous-systèmes d'une application de gestion de réseau.

4. Le système de contrôle de commande et d'alerte combiné selon la Revendication 1, où le moyen de génération d'alertes (205) est agencé en outre de façon à générer le message de notification audio avec au moins une caractéristique audio basée sur la notification reçue de la condition d'alerte détectée.

5. Le système de contrôle de commande et d'alerte combiné selon la Revendication 4, où la caractéristique audio est un niveau de volume du message de notification audio généré.

6. Le système de contrôle de commande et d'alerte combiné selon la Revendication 4, où la caractéristique audio est une caractéristique de balance audio destinée au positionnement de la source de l'audio dans une direction prédéterminée.

7. Le système de contrôle de commande et d'alerte combiné selon la Revendication 1, où le moyen de génération d'alertes (205) comprend en outre un moyen de filtrage du message de notification audio généré en fonction d'une ou de plusieurs propriétés du message de notification audio.

8. Le système de contrôle de commande et d'alerte combiné selon la Revendication 1, où le moyen de détermination du trajet de notification est agencé de façon à analyser un paramètre de la condition d'alerte détectée et à sélectionner le trajet de notification en fonction du paramètre.

9. Le système de contrôle de commande et d'alerte combiné selon la Revendication 1, où le moyen de détermination du trajet de notification est agencé de façon à analyser une liste en escalade d'utilisateurs auxquels notifier la condition d'alerte, où la liste en escalade est une liste hiérarchique d'utilisateurs structurée de façon à identifier un trajet de notification en fonction d'un délai de non-réponse des utilisateurs dans la liste en escalade à l'intérieur d'une limite temporelle désignée.

10. Le système de contrôle de commande et d'alerte combiné selon la Revendication 1, où le moyen de génération du message de notification audio comprend :
un moyen de détermination d'un utilisateur associé au message de notification audio,
un moyen de détermination d'une préférence de langue associée à l'utilisateur, et
un moyen de construction du message audio en fonction de la préférence de langue.

11. Un procédé de contrôle de la communication d'alertes et de commandes entre un système de contrôle de commande et d'alerte combiné d'un système (100) comprenant une pluralité de composants et d'agents de gestion (120) qui surveillent et gèrent lesdits composants et une pluralité de dispositifs d'utilisateur (210, 214, 216, 218, 245) par l'intermédiaire d'un trajet de communication unique, le système de contrôle d'alerte combiné comprenant un moyen de génération d'alertes (205) destiné à la génération d'une alerte audio, un moyen de contrôle de commande (250) destiné au traitement d'une commande audio, et un référentiel d'objets (110) destiné à la conservation en mémoire d'objets de commande et de notifications d'événement, le procédé comprenant l'exécution par le système de contrôle de commande et d'alerte combiné des opérations suivantes :
au niveau du moyen de génération d'alertes (205),
i) la réception d'une notification d'une condition d'alerte détectée à l'intérieur dudit système (100) par ledit moyen de génération d'alertes en fonction d'une notification d'événement provenant dudit référentiel d'objets (110), et en réponse,
ii) la détermination d'un trajet de notification associé à la condition d'alerte détectée,
iii) la génération d'un message de notification d'alerte audio en fonction de la notification reçue de la condition d'alerte détectée au moyen d'un composant de génération de parole (215), et
iv) la transmission du message de notification d'alerte audio généré audit au moins un dispositif de la pluralité de dispositifs d'utilisateur par l'intermédiaire du trajet de notification déterminé, et
au niveau du moyen de contrôle de commande (250)
i) la réception d'une commande audio à partir d'un desdits dispositifs d'utilisateur (210, 214, 216, 218, 245), et en réponse,
ii) le traitement de la commande audio reçue de façon à dériver des données de commande au moyen d'un composant de reconnaissance vocale (210),
iii) la construction d'une commande en fonction des données de commande dérivées, et
iv) la conservation en mémoire de la commande construite dans ledit référentiel d'objets (110).

12. Un support à mémoire lisible par ordinateur conservant en mémoire des instructions de traitement qui, lorsqu'elles sont exécutées par un ordinateur adapté, amènent l'ordinateur à être configuré sous la forme du système de contrôle de commande et d'alerte combiné selon l'une quelconque des Revendications 1 à 10.
